# EUROPEAN PATENT SPECIFICATION

(11) **EP 2 927 644 B1**
(45) Date of publication and mention of the grant of the patent: **15.08.2018**
(21) Application number: 14305466.6
(22) Date of filing: 31.03.2014
(51) Int. Cl.: H02J 3/14, G01D 4/00, G06Q 10/06, G06Q 50/06

(54) **System and method for performing problem-solving in smart grid networks**
System und Verfahren zur Bereitstellung einer Problemlösung in Smart-Grid-Netzen
Système et procédé de réalisation de la résolution de problèmes dans des réseaux électriques intelligents

(43) Date of publication of application: 07.10.2015
(73) Proprietor: Alcatel Lucent, 91620 Nozay (FR)
(72) Inventor: Gacanin, Haris, 2018 Antwerpen (BE)
(74) Representative: Nokia EPO representatives

(56) References cited:
- EP-A2- 0 942 573
- WO-A1-2013/030045
- DE-A1- 4 321 458
- US-A1- 2007 124 026
- US-A1- 2011 137 876
- US-A1- 2013 106 617

## Description

### Field of Invention

The field of the invention relates to problem-solving in smart grid networks. Particular embodiments relate to systems, methods and computer program products for performing problem-solving in a smart grid network comprising a first and a second smart grid network owned by a different operator.

### Background

International Telecommunication Union (ITU) G.hnem will enable cost-effective smart grid applications such as distribution automation, advanced metering infrastructure (AMI), demand side management (DSM), grid-to-home communications, home/building energy management, home automation, vehicle-to-grid and vehicle-to-charging station communications.

In the G.hnem standard different domains are available for the possible communication over different mediums (i.e., wireless, powerline cables, etc.). The available network resources are limited by the network connectivity and a large number of network devices. Home network applications are becoming very popular and they can be provided by more than one network operator. In most developed countries where Smart Grid can be (is) profitable, the grid segments such as generation, transport, distribution and retail are not owned by a single operator due to European Union regulations. These days, it stands to reason that advanced management for home networks will eventually be more demanding. In particular, a remote management mechanism for co-located service operators becomes an important issue.

US 2013/106617 (A1) discloses a smart metering system using a white space band, including a band search sensor scanning a digital public broadcast channel band in a predefined area, a band management server managing area specific broadcast channel status information based on the scanning and searching a white space band that is idle to be allocated as a smart metering data transmission channel, and a base station allocating the smart metering data transmission channel from the band management server and forming a wireless communication channel between a smart meter and a grid central server via the allocated smart metering data transmission channel.

DE 43 21 458 (A1) discloses a method and system for supporting network management, wherein network management installations owned by different operators exchange status information about the respective communication networks they manage.

US 2007/124026 (A1) discloses an agent-based auction system and method for allocating distributed energy resources. The document WO 2013/030045 A1 discloses a method and system for troubleshooting in in-house networks.

### Summary

Embodiments of the invention aim to provide a system, a method, and a computer program product allowing solving interference problems in a smart grid network comprising a first and a second smart grid network owned by a different operator.

According to a first aspect of the invention there is provided a system for performing problem solving in a smart grid network, according to independent claim 1, said smart grid network comprising at least a first smart grid operator network having a first plurality of smart grid devices, and a second smart grid operator network having a second plurality of smart grid devices. The system comprises a first plurality of concentrators associated with said first operator network, each concentrator thereof being configured for collecting first data from said first plurality of smart grid devices and for sending said collected data in processed or raw form to a first data coordination centre; a second plurality of concentrators associated with said second operator network, each concentrator thereof being configured for collecting second data from the second plurality of smart grid devices and for sending said collected data in processed or raw form to a second data coordination centre; and a management system. The management system is configured for receiving the collected first and second data in processed form or raw form from the first and second data coordination centres; and for communicating a troubleshooting strategy to the first and/or second data coordination systems based on said received first and second data. The first and second concentrators are further configured to receive instructions from said first and second data coordination centres based on the communicated trouble shooting strategy, respectively, and to adjust a setting of a smart grid device of said first and second plurality of smart grid devices in function of the received instructions, respectively. Said first operator network comprises any one or more of the following domains: a high voltage smart grid segment, a medium voltage smart grid segment, a low voltage smart grid segment. Said second operator network comprises: a high voltage smart grid segment, a medium voltage smart grid segment, and a low voltage smart grid segment. Said first and second plurality of concentrators comprises at least one concentrator for each segment, respectively. Embodiments are based *inter alia* on the inventive insight that by providing, on the one hand, concentrators in each smart grid operator network which communicate with a data coordination centre of their grid operator network, and, on the other hand, an "over-the-top" management system, interference problems may be solved more easily, compared to mechanisms that are performed within a single operator network.

In a preferred embodiment the collected data comprises values for any one or more of the following parameters of a smart grid device: a physical layer parameter such as a used channel, an available channel; a measurable parameter, such as transmit power, channel gain, SNR; a network layer parameter such as a device identification, a MAC address, user identification, IP address, network identification.

In a preferred embodiment the management system is configured to compare a value for a parameter of a first smart grid device of said first plurality of smart grid devices with a value for the same parameter of a second smart grid device of said second plurality of smart grid devices, and to communicate a troubleshooting strategy in the form of a reconfiguration of the same or a different parameter. In an exemplary embodiment thereof the management system is configured to compare a value for a physical layer parameter of a first smart grid device of said first plurality of smart grid devices with a value for the same physical layer parameter of a second smart grid device of said second plurality of smart grid devices, and to communicate a troubleshooting strategy in the form of a reconfiguration of the same or a different physical layer parameter. In another exemplary embodiment thereof the management system is configured to compare a value for a network layer parameter of a first smart grid device of said first plurality of smart grid devices with a value for the same network layer parameter of a second smart grid device of said second plurality of smart grid devices, and to communicate a troubleshooting strategy in the form of a reconfiguration of the same or a different network layer parameter.

In a preferred embodiment the management system, the management system, the first and/or second data coordination centre, and the first and second plurality of concentrators are provided with a remote management interface such that a setting of a smart grid device of the first and second plurality of smart grid devices can be adjusted remotely. This may be a custom made remote management application programming interface or a standardized remote management interface using e.g. TR-069 (Technical Report 069, a Broadband Forum technical specification entitled CPE WAN Management Protocol (CWMP)) or the Open Mobile Alliance (OMA) Device Management (DM) (OMA-DM) protocol. Note that it is possible to use a combination of custom made and standardized interfaces. More in particular the remote management application programming interface may be configured for sending remote calls in order to reconfigure any one or more of the following parameters of a smart grid device: a physical layer parameter such as a used channel, an available channel; a measurable parameter, such as transmit power, channel gain, SNR; a network layer parameter such as a device identification, a MAC address, user identification, IP address, network identification.

According to a second aspect of the invention there is provided a method for performing problem solving in a smart grid network, according to the independent method claim. said smart grid network comprising at least a first smart grid operator network having a first plurality of smart grid devices, and a second smart grid operator network having a second plurality of smart grid devices. The method comprises: in said first smart grid operator network, collecting first data from the first plurality of smart grid devices; and sending the collected data in processed or raw form to a first data coordination centre; in said second smart grid operator network, collecting second data from the second plurality of smart grid devices; and sending the collected data in processed or raw form to a second data coordination centre; processing the collected first and second data and communicating a troubleshooting strategy to the first and/or second data coordination systems based on the processed first and second data; and adjusting a setting of a smart grid device of said first and second plurality of smart grid devices in function of the communicated trouble shooting strategy. Said first operator network comprises any one or more of the following domains: a high voltage smart grid segment, a medium voltage smart grid segment, a low voltage smart grid segment. Said second operator network comprises: a high voltage smart grid segment, a medium voltage smart grid segment, and a low voltage smart grid segment. Said first and second plurality of concentrators comprises at least one concentrator for each segment, respectively.

According to a preferred embodiment the collected data comprises values for any one or more of the following parameters of a smart grid device: a physical layer parameter such as a used channel, an available channel; a measurable parameter, such as transmit power, channel gain, SNR; a network layer parameter such as a device identification, a MAC address, user identification, IP address, network identification.

According to a preferred embodiment the processing comprises comparing a value for a parameter of a first smart grid device of said first plurality of smart grid devices with a value for the same parameter of a second smart grid device of said second plurality of smart grid devices, and communicating a troubleshooting strategy in the form of a reconfiguration of the same or a different parameter. According to an exemplary embodiment thereof the processing comprises comparing a value for a physical layer parameter of a first smart grid device of said first plurality of smart grid devices with a value for the same physical layer parameter of a second smart grid device of said second plurality of smart grid devices, and communicating a troubleshooting strategy in the form of a reconfiguration of the same or a different physical layer parameter. According to another exemplary embodiment thereof the processing comprises comparing a value for a network layer parameter of a first smart grid device of said first plurality of smart grid devices with a value for the same network layer parameter of a second smart grid device of said second plurality of smart grid devices, and to communicate a troubleshooting strategy in the form of a reconfiguration of the same or a different network layer parameter.

In the context of the present invention the smart grid device may be e.g. a sensor or a communication modem. The term sensor component may refer to any sensor, any metering device, or any other device capable of performing measurements, and the sensor component is further configured for sending data messages to at least one concentrator, optionally via one or more substation components. The term substation component refers to a communication device used for performing an assist communication function, also called a relay function between the sensor components and the concentrators.

In the context of the present invention the term concentrator refers to a control entity communicating with a plurality of smart grid devices and configured for performing control tasks and for sending control messages to the smart grid devices, optionally via one or more substation components. More in particular a concentrator os configured for obtaining parameter data from the surrounding smart grid devices. One concentrator may manage e.g. between 1000 and 500.000 smart grid devices. In a smart grid operator network typically more than 10, and e.g. between 50 and 200 concentrators may be provided, depending on the size of the network. A control component has functionalities to allocate and coordinate network devices and resources of the smart grid network, and may be further configured to analyze the data messages received from the sensor components. The concentrators, any substations and the smart grid devices are IP enabled devices, and the exchanged packets contained in the message signals are sent via an IP protocol.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a smart grid architecture;
Figures 2A and 2B illustrate respectively the diagnostics and trouble-shooting concept and problems that may occur when performing trouble-shooting within an operator network in the case a multi-operator smart grid network;
Figure 3 illustrates an exemplary embodiment of a system of the invention; and
Figures 4A-4D illustrate an exemplary embodiment of a method of the invention.

### Description of embodiments

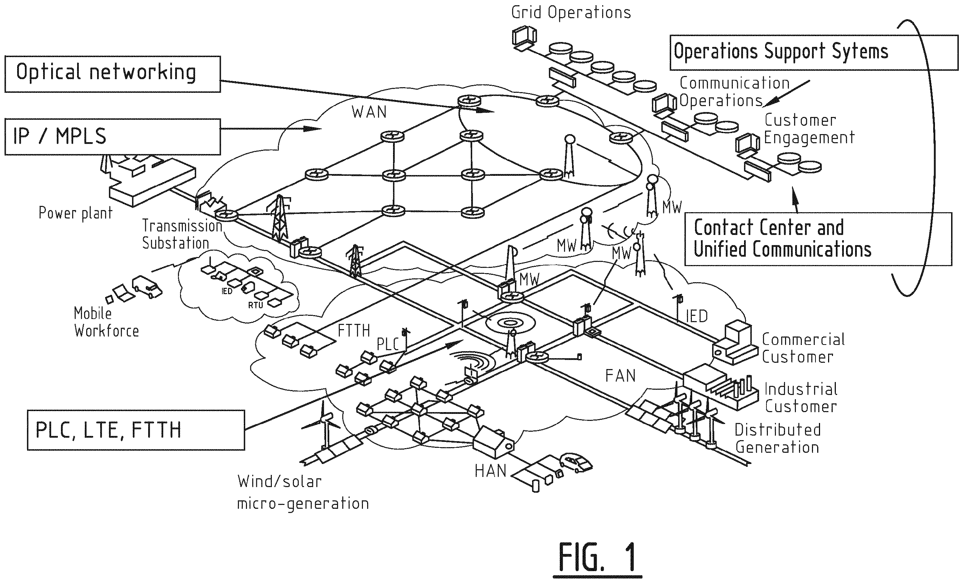

Figure 1 illustrates the schematic of an operations support systems (OSS) solution for a single Smart Grid operator. Currently, only solutions designed for a single operator who is the network owner are available. However, in most developed countries where Smart Grid can be (is) profitable the grid segments such as generation, transport, distribution and retail are not owned by a single operator due to European Union regulations.

To support the exchanges of smart grid's sensor information and control messages an ICT communication network is required. Figure 1 illustrates schematically a smart grid ICT network with a single smart grid operator. For a smart grid ICT network several communication technologies are available: power line communication (PLC), copper or optical fiber, and wireless communication (ad-hoc, mesh and cellular architectures). The core HV network is established by optical communications, while MV and LV networks may use various technologies such as wireless (LTE, GSM, Wimax), power line communication (PLC) and fiber-to-the-home (FTTH). The most common solution is PLC since it is easy to exploit the existing wired infrastructure and the deployment cost is greatly reduced. In addition, protocols like Ethernet, IPv4 and IPv6, are supported in smart grid networks and enable an easy integration with other IP-based networks via multi-protocol label switching (MPLS). The G.hnem standard developed by ITU-T supports power lines as a physical layer for controlling power utilities. G.hnem also supports the higher layer applications protocols like Ethernet, IPv4 and IPv6, as a result of which G.hnem compliant power grid communication networks can be easily integrated with IP-based networks. In that way there is provided a link between electricity networks and communications networks, enabling utilities to exercise a higher level of monitoring and control of the power grid.

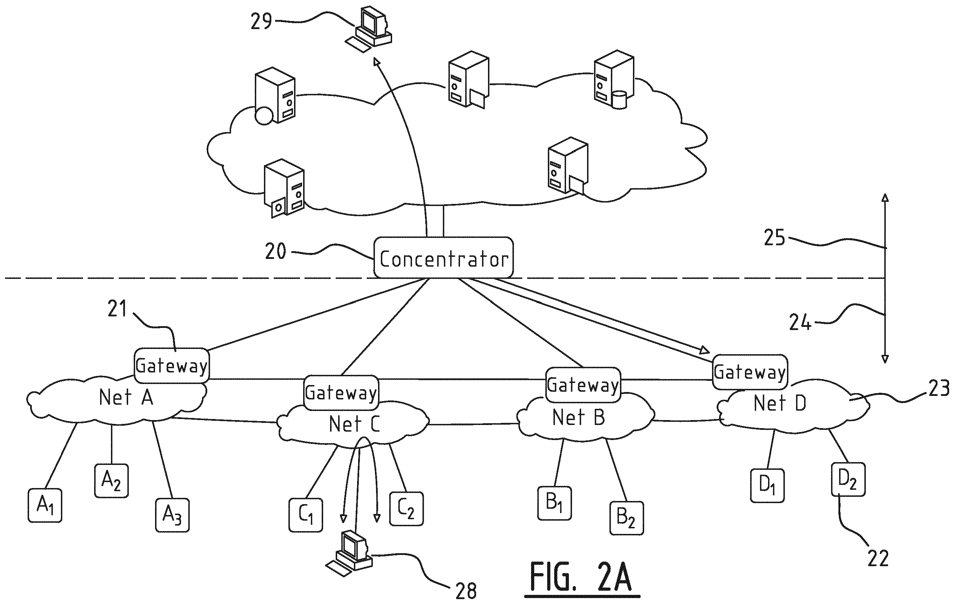

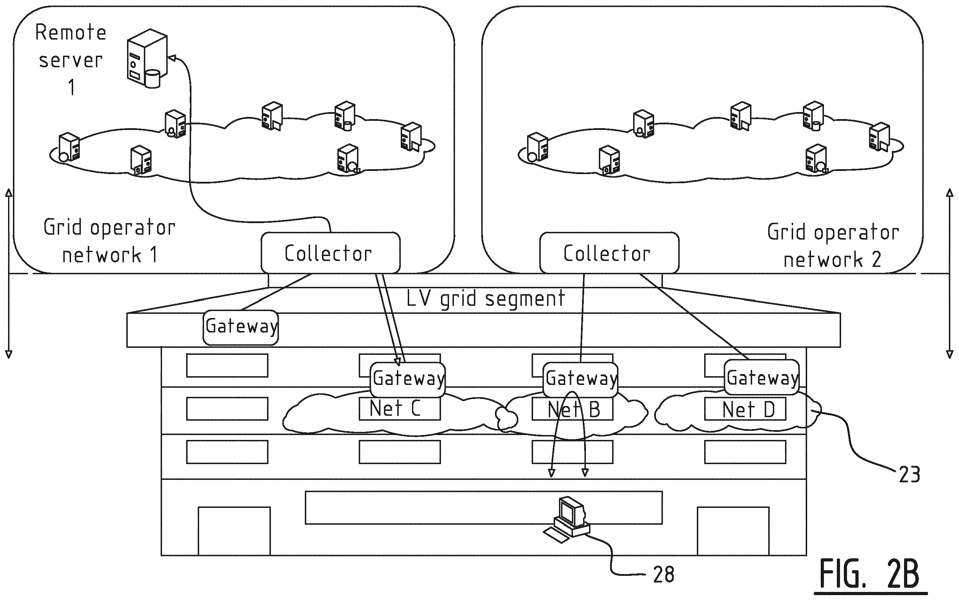

Figure 2a illustrates a prior art concept of independent Smart Grid network segments 24 managed by a single Smart Grid operator ICT network 25. A plurality of gateways 21 communicate with a concentrator 20 of the Smart Grid operator ICT network 25. The gateways 21 are connected to a number of home networks 23 with end user equipment 22. Troubleshooting can take place either from inside of the home network 23, see arrow 28, or from outside of the home network 23, see arrow 29. The scenario with multiple Smart Grid operators is illustrated in figure 2b. In both examples of figure 2a and 2b an interference problem between Net B and Net C cannot be resolved. This is because both of these concepts are limited by the fact that only information from within each 'physical' network can be obtained and this information is considered independently. This kind of diagnosis will provide a sub-optimal management since disruptive effects between different home networks from single or multiple service operators is not taken into consideration. Consequently, manual network solutions by operator's technicians or the customer himself is highly likely, and a user complaint will typically trigger the dispatch of technicians to investigate the problem. This procedure is very time consuming and highly costly. Thus, a more proactive dynamic management and coordination of different home networks is an object of embodiments of the invention.

Some monitoring features for single Smart Grid operator solutions are available in the market, see for example the solutions of by the company Power Plus Communications (PPC). Motive's M2M Communication Control (CC) and M2M Service Management (SM) R2.0 single operator solution also support monitoring functions.

An object of embodiments of the invention is to provide an over the top dynamic management and coordination mechanism for multiple Smart Grid network segments supported by a number of service/network operators. This will enable a centralized mechanism over different service/network providers for efficient coordination of different information. Such a solution may be particularly valuable for countries where different smart grid parts are not owned by a single company. In particular, exemplary embodiments are valuable for G.hnem network deployments.

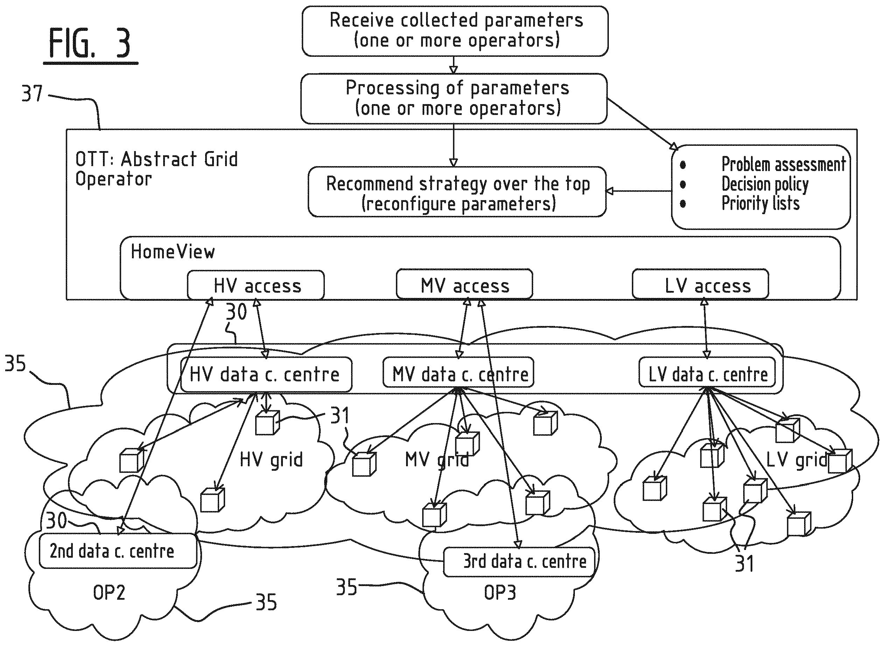

A system for performing problem solving in a smart grid network by using a dynamic management and coordination mechanism is illustrated in figure 3. The smart grid network comprises a first smart grid operator network 35 (OP1) having a first plurality of smart grid devices (not shown), and a second smart grid operator network 35 (OP2) having a second plurality of smart grid devices (not shown), and a third smart grid operator network 35 (OP3) having a third plurality of smart grid devices (not shown). It is assumed that the first smart grid operator network 35 (OP1) comprises a HV grid, a MV grid and a LV grid, while the second smart grid operator network 35 (OP2) comprises only a HV grid, and the third smart grid operator network 35 (OP3) comprises only a MV grid. Of course, other combinations are equally possible. The system comprises a first plurality of concentrators 31 associated with said first operator network 35 (OP1), each concentrator thereof being configured for collecting first data from said first plurality of smart grid devices; and for sending said collected data in processed or raw form to a first data coordination centre 30. In the illustrated example the first data coordination centre comprises a HV, a MV and a LV data coordination centre. The system further comprises a second plurality of concentrators (not shown) associated with said second operator network 35 (OP2), each concentrator thereof being configured for collecting second data from the second plurality of smart grid devices; and for sending said collected data in processed or raw form to a second data coordination centre 30. The system also comprises a third plurality of concentrators (not shown) associated with the third operator network 35 (OP2), each concentrator thereof being configured for collecting third data from the third plurality of smart grid devices; and for sending said collected data in processed or raw form to a third data coordination centre 30.

The system comprises a management system 37 configured for receiving said collected first, second and third data in optionally further processed form or in raw form from the first, second, and third data coordination centres 30; and for communicating a troubleshooting strategy to the first and/or second and/or third data coordination centre 30 based on the received first, second and third data, depending on the smart grid devices that are involved in the problem. The management system may configured to automatically detect any problems in the smart grid network of any of the operators, or may be operated when a problem is discovered in any of the operator networks OP1, OP2, OP3, upon request of the operator network that is experiencing a problem.

The first, second and third concentrators 31 may be further configured to receive instructions from the first, second and third data coordination centres 30 based on the communicated trouble shooting strategy, respectively, and to adjust a setting of a smart grid device of said first, second and third plurality of smart grid devices in function of the received instructions, respectively.

The data collected by the concentrators 31 may comprise values for any one or more of the following parameters of a smart grid device:
- a physical layer parameter such as a used channel, an available channel;
- a measurable parameter, such as transmit power, channel gain, SNR;
- a network layer parameter such as a device identification, a MAC address, user identification, IP address, network identification.

The management system 37 may be configured to compare a physical layer parameter of a first smart grid device of the first operator network 35 (OP1) with the same physical layer parameter of a second smart grid device of the second operator network 35 (OP2), and to communicate a troubleshooting strategy in the form of a reconfiguration of the same or a different physical layer parameter.

Alternatively or in addition the management system 37 may be configured to compare a network layer parameter of a first smart grid device of the first operator network 35 (OP1) with the same network layer parameter of a second smart grid device of the second operator network 35 (OP2), and to communicate a troubleshooting strategy in the form of a reconfiguration of the same or a different network layer parameter.

More in particular, the management system 37 may communicate the strategy to a concentrator 31, e.g. via a specifically adapted API interfaces, and the concentrator may configure the smart grid devices e.g. via further remote management API interfaces or via a standardized protocol such as the TR-069 remote management protocol. Alternatively, the management system 27, the data concentration centres 31, the coordinators 30, and the smart grid devices may all be IP devices configured to communicate via the TR-069 protocol to reconfigure a smart grid device in accordance with the determined troubleshooting strategy.

In a preferred embodiment the management system 37, the data coordination centres 30, and the first and second plurality of concentrators 31 are provided with a remote management application programming interface such that remote calls can be sent via the remote management application programming interfaces from the management system 37 in order to be able to efficiently reconfigure a smart grid device. More in particular the remote management application programming interface may be configured for sending suitable instructions in order to reconfigure any one or more of the following parameters of a smart grid device: a physical layer parameter such as a used channel, an available channel; a measurable parameter, such as transmit power, channel gain, SNR; a network layer parameter such as a device identification, a MAC address, user identification, IP address, network identification.

An embodiment of a system of the invention for use in a multiple operator smart grid is given in the following example where the operated channel (henceforth channel) is used as an example physical parameter. Other physical or higher layer home network parameters such as power, channel gain, MAC address, user ID, IP address, etc., can also be used. There is no constraint on access technology since both wireless and wireline technologies can be used in this example.

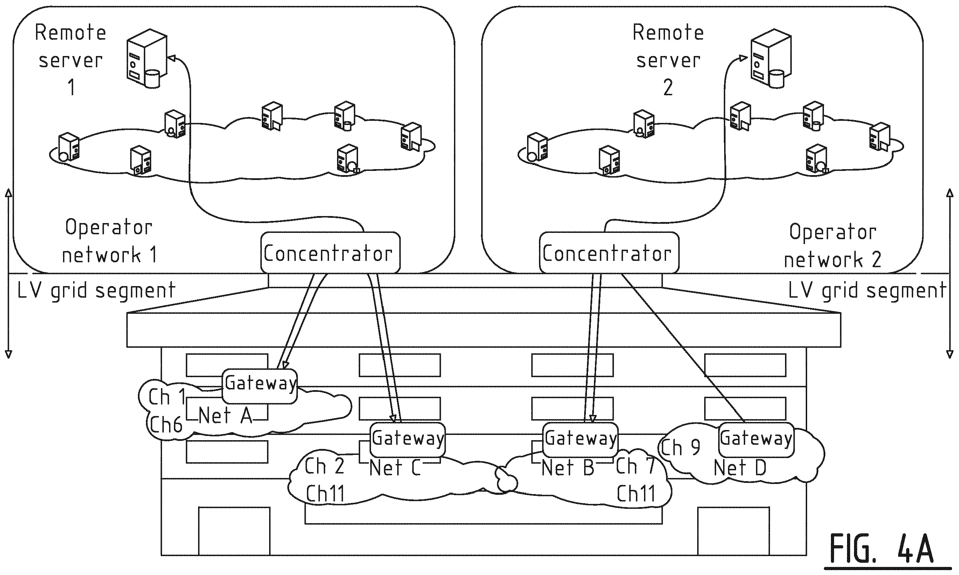

Let us assume a scenario with several Smart Grid access networks (Nets A, B, C and D) within the same residential dwellings as shown in figure 4A. In this scenario the focus is put on an exemplary case where Smart Grid is extended over apartment buildings where several different operators may offer their services. Thus, in figure 4A, only a low voltage (LV) (supply) Smart Grid segment is considered. Of course an implementation of this solution may take into consideration different grid segments as well. In this case the problems are more likely to happen if there is no additional solution to manage the Smart Grid application providers.

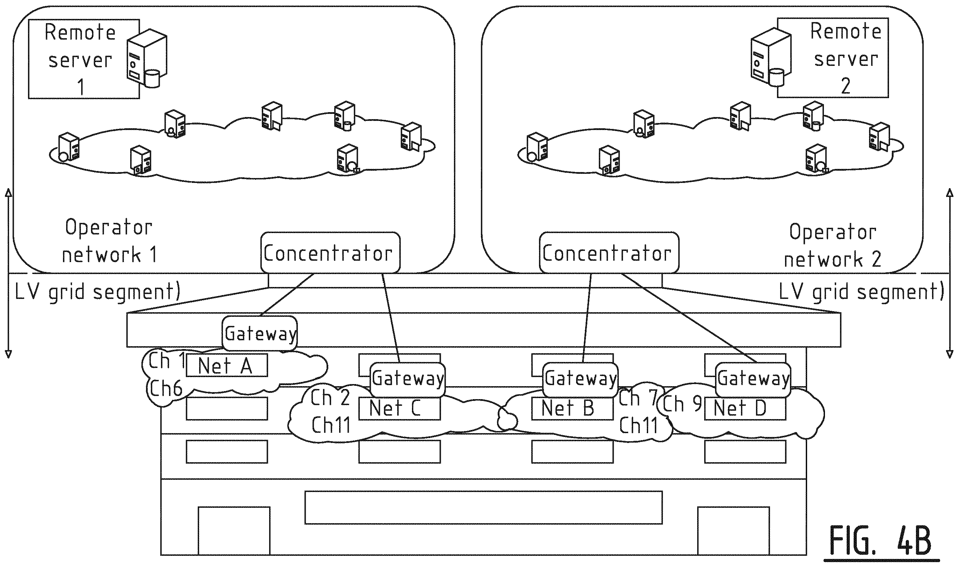

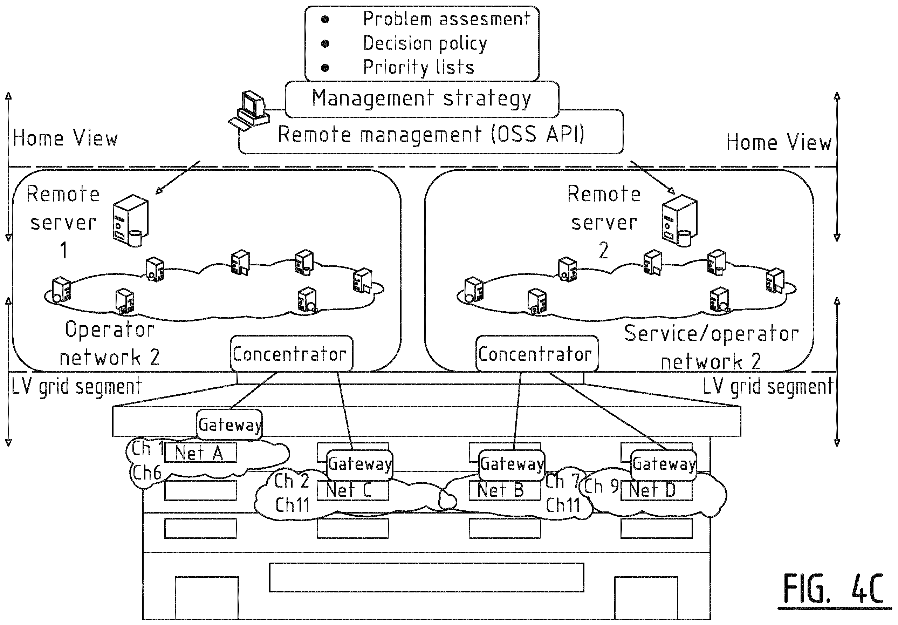

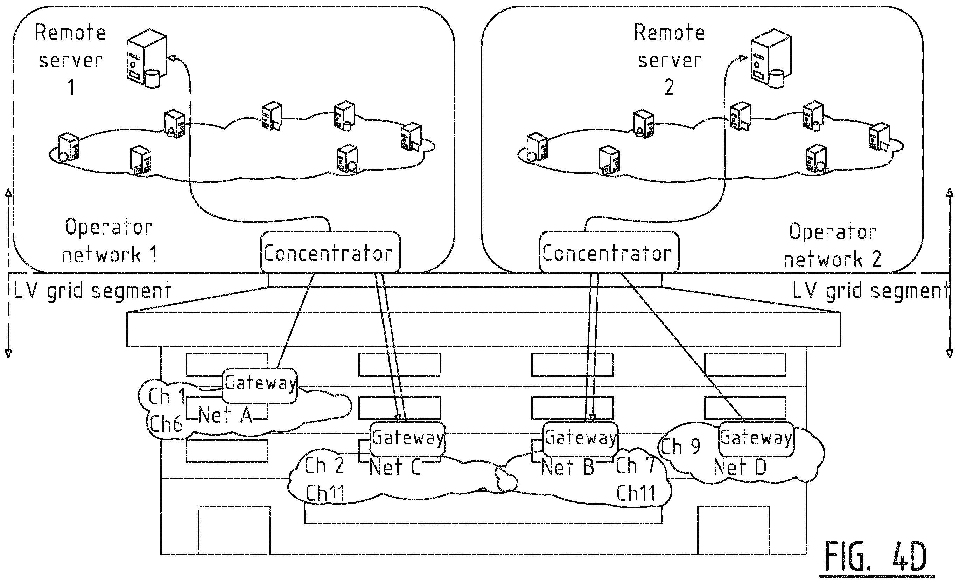

It is assumed that for example networks B and C are experiencing problems since the same channel 11 (Ch 11) is used across both home networks from different Smart Grid operators. Consequently, the customer information may not be reliable and its service may be degraded. According to an exemplary embodiment of the method, over the top management and coordination is foreseen in the following steps:
[Step 1], see figure 4A: a first data coordination centre indicated as remote server 1 of operator network 1 is able to access the available network parameters (such as signal power, used and available channels, network SID, device ID, etc.) or to order the parameter collection through a concentrator of operator network 1. The concentrator of operator network 1 is able to collect amongst others the parameters Ch2 and Ch11 of a smart grid device of Net C. In a similar way a second data coordination centre indicated as remote server 2 of operator network 2 is able to access the available network parameters or to order the parameter collection through a concentrator of operator network 2. The concentrator of operator network 2 is able to collect amongst others the parameters Ch7 and Ch11 of a smart grid device of Net B. The parameters may be collected using e.g. SNMP or TR-069 protocols. The parameters collected by remote server 1 and 2 may be first processed by the respective servers 1 and 2 to troubleshoot problems within each operator network 1 and 2 independently.
[Step 2], see figure 4B: the collected parameters are processed at the operator level by remote servers 1 and 2. If the problem cannot be solved within the operator network, the pre-processed data or the raw parameters may be sent by the remote server 1 and/or 2 to the "over-the-top" management system, e.g. in the form of a remote server configured with a remote management application programming interface (OSS API), see also figure 4C. Note that it is also possible to always send collected raw or pre-processed parameters to the "over-the-top" management system, and to make the trouble shooting of problems with the same operating network also the task of the "over-the-top" management system.
[Step 3], see figure 4C: based on input parameters and specified user and operator requirements (e.g., problem assessment/level, decision policy, priority lists, etc.) the proposed method recommends a coordination strategy to the remote servers 1 and 2 in order to overcome the inter-network interference problems. This may be done in an abstract layer by using Smart Grid operation support systems (OSS) application programming interface (API) remote management between different remote servers as shown in figure 4C. These API interfaces should then be integrated in the smart grid devices, the gateways and the concentrators to enable efficient data delivery. Alternatively the management system, the smart grid devices, the gateways and the concentrators may be configured to communicate via a standardized remote management interface such as TR-069 or the Open Mobile Alliance (OMA) Device Management (DM) (OMA-DM) protocol. Also, a combination of custom made (e.g. specific for a particular smart grid device) and standardized interfaces may be used.
[Step 4], see figure 4D: the reconfiguration is initiated to optimize the network usage for both operator networks as shown in figure 4D.

The unique benefit of embodiments of the invention is the fact that dynamic management and coordination of multiple smart grid network segments owned by multiple service operators is possible at single coordinated location. The operators will be coordinated and able to react and solve the problems that cause wrong reading, loss of data, etc. This way the intervention by the operator's help desk and technicians at the consumer residence may be avoided.

Embodiments of the invention may take into consideration information from different service operators and may provide recommendations to solve problems experienced by smart grid network segments/users for each of the operators. This solution may also prevent interventions by an operator technician at the customer premises, does not involve any human intervention, reduces the operator's operational costs, and reduces response time and the number of customer complaints at help desk.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A system for performing problem solving in a smart grid network, said smart grid network comprising at least a first smart grid operator network (35) having a first plurality of smart grid devices, and a second smart grid operator network (35) having a second plurality of smart grid devices, said first smart grid operator network and said second smart grid operator network being owned by a different operator;
said system comprising:
a first plurality of concentrators (31) associated with said first operator network, each first concentrator thereof being configured for collecting first data from said first plurality of smart grid devices; and for sending said collected data in processed or raw form to a first data coordination centre (30);
a second plurality of concentrators (31) associated with said second operator network, each second concentrator thereof being configured for collecting second data from the second plurality of smart grid devices; and for sending said collected data in processed or raw form to a second data coordination centre (30);
a management system (37) configured for receiving said collected first and second data in processed or raw form from said first and second data coordination centres; and for communicating a troubleshooting strategy for solving an interference problem to said first and/or second data coordination centres based on said received first and second data;
wherein each first and second concentrator is further configured to receive instructions from said first and second data coordination centres based on the communicated troubleshooting strategy, respectively, and to adjust a setting of a smart grid device of said first and second plurality of smart grid devices in function of the received instructions, respectively; and
wherein said first operator network comprises any one or more of the following domains: a high voltage (HV) smart grid segment, a medium voltage (MV) smart grid segment, a low voltage (LV) smart grid segment;
wherein said second operator network comprises: a high voltage (HV) smart grid segment, a medium voltage (MV) smart grid segment, and a low voltage (LV) smart grid segment;
wherein said first and second plurality of concentrators comprises at least one concentrator for each segment, respectively.

2. The system of claim 1, wherein the collected data comprises values for any one or more of the following parameters of a smart grid device:
a physical layer parameter such as a used channel, an available channel;
a measurable parameter, such as transmit power, channel gain, SNR;
a network layer parameter such as a device identification, a MAC address, user identification, IP address, network identification.

3. The system of claim 2, wherein the management system is configured to compare a value for a physical layer parameter of a first smart grid device of said first plurality of smart grid devices with a value for the same physical layer parameter of a second smart grid device of said second plurality of smart grid devices, and to communicate a troubleshooting strategy in the form of a reconfiguration of the same or a different physical layer parameter.

4. The system of claim 2 or 3, wherein the management system is configured to compare a value for a network layer parameter of a first smart grid device of said first plurality of smart grid devices with a value for the same network layer parameter of a second smart grid device of said second plurality of smart grid devices, and to communicate a troubleshooting strategy in the form of a reconfiguration of the same or a different network layer parameter.

5. The system of any one of the previous claims, wherein the management system, the first and/or second data coordination centre, and the first and second plurality of concentrators are provided with a remote management interface such that a setting of a smart grid device of the first and second plurality of smart grid devices can be adjusted remotely.

6. The system of claim 5, wherein the remote management interface is configured for adjusting any one or more of the following parameters of a smart grid device:
a physical layer parameter such as a used channel, an available channel;
a measurable parameter, such as transmit power, channel gain, SNR;
a network layer parameter such as a device identification, a MAC address, user identification, IP address, network identification.

7. A method for performing problem solving in a smart grid network, said smart grid network comprising at least a first smart grid operator network (35) having a first plurality of smart grid devices, and a second smart grid operator network (35) having a second plurality of smart grid devices, said first smart grid operator network and said second smart grid operator network being owned by a different operator;
said method comprising:
in said first smart grid operator network, collecting first data from said first plurality of smart grid devices; and sending said collected data in processed or raw form to a first data coordination centre (30);
in said second smart grid operator network, collecting second data from the second plurality of smart grid devices; and sending said collected data in processed or raw form to a second data coordination centre (30);
processing said collected first and second data and communicating a troubleshooting strategy for solving an interference problem to said first and/or second data coordination centres based on said processed first and second data;
adjusting a setting of a smart grid device of said first and second plurality of smart grid devices in function of the communicated troubleshooting strategy;
wherein said first operator network comprises any one or more of the following domains: a high voltage (HV) smart grid segment, a medium voltage (MV) smart grid segment, a low voltage (LV) smart grid segment;
wherein said second operator network comprises: a high voltage (HV) smart grid segment, a medium voltage (MV) smart grid segment, and a low voltage (LV) smart grid segment;
wherein said first and second plurality of concentrators comprises at least one concentrator for each segment, respectively.

8. The method of claim 7, wherein the collected data comprises values for any one or more of the following parameters of a smart grid device:
a physical layer parameter such as a used channel, an available channel;
a measurable parameter, such as transmit power, channel gain, SNR;
a network layer parameter such as a device identification, a MAC address, user identification, IP address, network identification.

9. The method of claim 8, wherein the processing comprises comparing a value for a physical layer parameter of a first smart grid device of said first plurality of smart grid devices with a value for the same physical layer parameter of a second smart grid device of said second plurality of smart grid devices, and communicating a troubleshooting strategy in the form of a reconfiguration of the same or a different physical layer parameter.

10. The method of claim 8 or 9, wherein the processing comprises comparing a value for a network layer parameter of a first smart grid device of said first plurality of smart grid devices with a value for the same network layer parameter of a second smart grid device of said second plurality of smart grid devices, and to communicate a troubleshooting strategy in the form of a reconfiguration of the same or a different network layer parameter.

11. The method of any one of the claims 7-10, wherein the processing comprises comparing a value for a parameter of a first smart grid device of said first plurality of smart grid devices with a value for the same parameter of a second smart grid device of said second plurality of smart grid devices, and communicating a troubleshooting strategy in the form of a reconfiguration of the same or a different parameter.

## Patentansprüche

1. Verfahren zum Durchführen von Problemlösen in einem Smart-Grid-Netzwerk, wobei besagtes Smart-Grid-Netzwerk umfasst mindestens ein erstes Smart-Grid-Betreibernetzwerk (35), das eine erste Vielzahl von Smart-Grid-Geräten aufweist, und ein zweites Smart-Grid-Betreibernetzwerk (35), das eine zweite Vielzahl von Smart-Grid-Geräten aufweist, wobei besagtes erstes Smart-Grid-Betreibernetzwerk und besagtes zweites Smart-Grid-Betreibernetzwerk unterschiedlichen Betreibern gehören;
wobei besagtes System umfasst:
eine erste Vielzahl von Konzentratoren (31), die verbunden sind mit besagtem ersten Betreibernetzwerk, wobei jeder erste Konzentrator davon konfiguriert ist zum Sammeln erster Daten aus besagter ersten Vielzahl von Smart-Grid-Geräten; und zum Senden besagter gesammelten Daten in verarbeiteter oder Rohform an ein erstes Datenkoordinationszentrum (30);
eine zweite Vielzahl von Konzentratoren (31), die verbunden sind mit besagtem zweiten Betreibernetzwerk, wobei jeder zweite Konzentrator davon konfiguriert ist zum Sammeln zweiter Daten aus der zweiten Vielzahl von Smart-Grid-Geräten; und zum Senden besagter gesammelten Daten in verarbeiteter oder Rohform an ein zweites Datenkoordinationszentrum (30);
ein Verwaltungssystem (37), das konfiguriert ist zum Empfangen besagter ersten und zweiten Daten in verarbeiteter oder Rohform von besagten ersten und zweiten Datenkoordinationszentren; und zum Mitteilen einer Fehlersuchstrategie zum Lösen eines Interferenzproblems an besagtes erstes und/oder zweites Datenkoordinationszentrum auf Grundlage besagter empfangenen ersten und zweiten Daten;
wobei jeder erste und zweite Konzentrator weiterhin konfiguriert ist zum Empfangen von Befehlen von besagten jeweils ersten und zweiten Datenkoordinationszentren auf Grundlage der mitgeteilten Fehlersuchstrategie,
und zum Einstellen einer Einstellung eines Smart-Grid-Gerätes jeweils besagter ersten und zweiten Vielzahl von Smart-Grid-Geräten in Funktion der empfangenen Anweisungen; und
wobei besagtes erstes Betreibernetzwerk eine beliebige oder mehrere der folgenden Domänen umfasst: ein Hochspannungs-Smart-Grid-Segment (HV), ein Mittelspannungs-Smart-Grid-Segment (MV), ein Niederspannungs-Smart-Grid-Segment (LV);
wobei besagtes zweites Betreibernetzwerk umfasst: ein Hochspannungs-Smart-Grid-Segment (HV), ein Mittelspannungs-Smart-Grid-Segment (MV) und ein Niederspannungs-Smart-Grid-Segment (LV);
wobei besagte erste und zweite Vielzahl von Konzentratoren jeweils mindestens einen Konzentrator für jedes Segment umfasst.

2. Verfahren nach Anspruch 1, wobei die gesammelten Daten Werte umfassen für jeden oder mehrere der folgenden Parameter eines Smart-Grid-Gerätes:
einen physikalischen Schichtparameter wie zum Beispiel einen verwendeten Kanal, einen verfügbaren Kanal;
einen messbaren Parameter wie zum Beispiel eine Sendeleistung, eine Kanalverstärkung, SNR;
einen Netzwerkschichtparameter wie zum Beispiel eine Geräteidentifikation, eine MAC-Adresse, eine Benutzeridentifizierung, eine IP-Adresse, eine Netzwerkidentifikation.

3. System nach Anspruch 2, wobei das Verwaltungssystem konfiguriert ist zum Vergleichen eines Wertes für einen physikalischen Schichtparameter eines ersten Smart-Grid-Gerätes besagter ersten Vielzahl von Smart-Grid-Geräten mit einem Wert für denselben physikalischen Schichtparameter eines zweiten Smart-Grid-Gerätes besagter zweiten Vielzahl von Smart-Grid-Geräten umfasst, und Mitteilen einer Fehlersuchstrategie in Form einer Neukonfiguration desselben oder eines anderen physikalischen Schichtparameters.

4. System nach Anspruch 2 oder 3, wobei das Verwaltungssystem konfiguriert ist zum Vergleichen eines Wertes für einen Netzwerkschichtparameter eines ersten Smart-Grid-Gerätes besagter ersten Vielzahl von Smart-Grid-Geräten mit einem Wert für denselben Netzwerkschichtparameter eines zweiten Smart-Grid-Gerätes besagter zweiten Vielzahl von Smart-Grid-Geräten, und Mitteilen einer Fehlersuchstrategie in Form einer Neukonfiguration desselben oder eines anderen Netzwerkschichtparameters.

5. System nach einem beliebigen der vorhergehenden Ansprüche, wobei das Verwaltungssystem, das erste und/oder das zweite Datenkoordinationszentrum und die erste und zweite Vielzahl von Konzentratoren bereitgestellt werden mit einer Fernverwaltungsschnittstelle, sodass ein Einstellen eines Smart-Grid-Gerätes der ersten und zweiten Vielzahl von Smart-Grid-Geräten ferneingestellt werden kann.

6. System nach Anspruch 5, wobei die Fernverwaltungsschnittstelle konfiguriert ist zum Einstellen eines beliebigen oder mehrerer der folgenden Parameter eines Smart-Grid-Gerätes:
einen physikalischen Schichtparameter wie zum Beispiel einen verwendeten Kanal, einen verfügbaren Kanal;
einen messbaren Parameter wie zum Beispiel eine Sendeleistung, eine Kanalverstärkung, SNR;
einen Netzwerkschichtparameter wie zum Beispiel eine Geräteidentifikation, eine MAC-Adresse, eine Benutzeridentifizierung, eine IP-Adresse, eine Netzwerkidentifikation.

7. Verfahren zum Durchführen von Problemlösen in einem Smart-Grid-Netzwerk, wobei besagtes Smart-Grid-Netzwerk umfasst mindestens ein erstes Smart-Grid-Betreibernetzwerk (35), das eine erste Vielzahl von Smart-Grid-Geräten aufweist, und ein zweites Smart-Grid-Betreibernetzwerk (35), das eine zweite Vielzahl von Smart-Grid-Geräten aufweist, wobei besagtes erstes Smart-Grid-Betreibernetzwerk und besagtes zweites Smart-Grid-Betreibernetzwerk unterschiedlichen Betreibern gehören;
wobei besagtes Verfahren umfasst:
in besagtem ersten Smart-Grid-Betreibernetzwerk, Sammeln erster Daten aus besagter ersten Vielzahl von Smart-Grid-Geräten; und Senden besagter gesammelten Daten in verarbeiteter oder Rohform an ein erstes Datenkoordinationszentrum (30);
in besagtem zweiten Smart-Grid-Betreibernetzwerk, Sammeln zweiter Daten aus der zweiten Vielzahl von Smart-Grid-Geräten; und Senden besagter gesammelten Daten in verarbeiteter oder Rohform an ein zweites Datenkoordinationszentrum (30);
Verarbeiten besagter gesammelten ersten und zweiten Daten und Mitteilen einer Fehlersuchstrategie zum Lösen eines Interferenzproblems an besagtes erstes und/oder zweites Datenkoordinationszentrum auf Grundlage besagter verarbeiteten ersten und zweiten Daten;
Einstellen einer Einstellung eines Smart-Grid-Gerätes besagter ersten und zweiten Vielzahl von Smart-Grid-Geräten in Funktion der mitgeteilten Fehlersuchstrategie;
wobei besagtes erstes Betreibernetzwerk eine beliebige oder mehrere der folgenden Domänen umfasst: ein Hochspannungs-Smart-Grid-Segment (HV), ein Mittelspannungs-Smart-Grid-Segment (MV), ein Niederspannungs-Smart-Grid-Segment (LV);
wobei besagtes zweites Betreibernetzwerk umfasst: ein Hochspannungs-Smart-Grid-Segment (HV), ein Mittelspannungs-Smart-Grid-Segment (MV) und ein Niederspannungs-Smart-Grid-Segment (LV);
wobei besagte erste und zweite Vielzahl von Konzentratoren jeweils mindestens einen Konzentrator für jedes Segment umfasst.

8. Verfahren nach Anspruch 7, wobei die gesammelten Daten Werte umfassen für jeden oder mehrere der folgenden Parameter eines Smart-Grid-Gerätes:
einen physikalischen Schichtparameter wie zum Beispiel einen verwendeten Kanal, einen verfügbaren Kanal;
einen messbaren Parameter wie zum Beispiel eine Sendeleistung, eine Kanalverstärkung, SNR;
einen Netzwerkschichtparameter wie zum Beispiel eine Geräteidentifikation, eine MAC-Adresse, eine Benutzeridentifizierung, eine IP-Adresse, eine Netzwerkidentifikation.

9. Verfahren nach Anspruch 8, wobei das Verarbeiten das Vergleichen eines Wertes für einen physikalischen Schichtparameter eines ersten Smart-Grid-Gerätes besagter ersten Vielzahl von Smart-Grid-Geräten mit einem Wert für denselben physikalischen Schichtparameter eines zweiten Smart-Grid-Gerätes besagter zweiten Vielzahl von Smart-Grid-Geräten umfasst, und Mitteilen einer Fehlersuchstrategie in Form einer Neukonfiguration desselben oder eines anderen physikalischen Schichtparameters.

10. Verfahren nach Anspruch 8 oder 9, wobei das Verarbeiten das Vergleichen eines Wertes für einen Netzwerkschichtparameter eines ersten Smart-Grid-Gerätes besagter ersten Vielzahl von Smart-Grid-Geräten mit einem Wert für denselben Netzwerkschichtparameter eines zweiten Smart-Grid-Gerätes besagter zweiten Vielzahl von Smart-Grid-Geräten umfasst, und Mitteilen einer Fehlersuchstrategie in Form einer Neukonfiguration desselben oder eines anderen
Netzwerkschichtparameters.

11. Verfahren nach einem beliebigen der Ansprüche 7-10, wobei das Verarbeiten umfasst das Vergleichen eines Wertes für einen Parameter eines ersten Smart-Grid-Gerätes besagter ersten Vielzahl von Smart-Grid-Geräten mit einem Wert für denselben Parameter eines zweiten Smart-Grid-Gerätes besagter zweiten Vielzahl von Smart-Grid-Geräten, und Mitteilen einer Fehlersuchstrategie in Form einer Neukonfiguration desselben oder eines anderen Parameters.

## Revendications

1. Système destiné à résoudre des problèmes dans un réseau électrique intelligent, ledit réseau électrique intelligent comprenant au moins un premier réseau d'opérateur de réseau électrique intelligent (35) disposant d'une première pluralité de dispositifs de réseau électrique intelligent, et un deuxième réseau d'opérateur de réseau électrique intelligent (35) disposant d'une deuxième pluralité de dispositifs de réseau électrique intelligent, ledit premier réseau d'opérateur de réseau électrique intelligent et ledit deuxième réseau d'opérateur de réseau électrique intelligent étant détenus par des opérateurs différents ;
ledit système comprenant :
une première pluralité de concentrateurs (31) associés audit premier réseau d'opérateur, chacun de ces premiers concentrateurs étant configuré pour recueillir des premières données en provenance de ladite première pluralité de dispositifs de réseau électrique intelligent ; et pour envoyer lesdites données recueillies sous forme traitée ou brute à un premier centre de coordination de données (30) ;
une deuxième pluralité de concentrateurs (31) associés audit deuxième réseau d'opérateur, chacun de ces deuxièmes concentrateurs étant configuré pour recueillir des deuxièmes données en provenance de la deuxième pluralité de dispositifs de réseau électrique intelligent ; et pour envoyer lesdites données recueillies sous forme traitée ou brute à un deuxième centre de coordination de données (30) ;
un système de gestion (37) configuré pour recevoir lesdites premières et deuxièmes données recueillies sous forme traitée ou brute en provenance desdits premier et deuxième centres de coordination de données ; et pour communiquer une stratégie de résolution de problème destinée à résoudre un problème d'interférence auxdits premier et/ou deuxième centres de coordination de données en fonction desdites premières et deuxièmes données reçues ;
dans lequel chaque premier et deuxième concentrateur est en outre configuré pour recevoir des instructions en provenance desdits premier et deuxième centres de coordination de données en fonction de la stratégie de résolution de problème communiquée, respectivement, et pour ajuster un réglage d'un dispositif de réseau électrique intelligent desdites première et deuxième pluralités de dispositifs de réseau électrique intelligent en fonction des instructions reçues, respectivement ; et
dans lequel ledit premier réseau d'opérateur comprend l'un quelconque ou plusieurs des domaines suivants : un tronçon de réseau électrique intelligent haute tension (HV), un tronçon de réseau électrique intelligent moyenne tension (MV), un tronçon de réseau électrique intelligent basse tension (LV) ;
dans lequel ledit deuxième réseau d'opérateur comprend : un tronçon de réseau électrique intelligent haute tension (HV), un tronçon de réseau électrique intelligent moyenne tension (MV) et un tronçon de réseau électrique intelligent basse tension (LV) ;
dans lequel lesdites premières et deuxièmes pluralités de concentrateurs comprennent au moins un concentrateur pour chaque tronçon, respectivement.

2. Système selon la revendication 1, dans lequel les données collectées comprennent des valeurs pour l'un quelconque ou plusieurs des paramètres suivants d'un dispositif de réseau électrique intelligent :
un paramètre de couche physique tel qu'un canal utilisé, un canal disponible ;
un paramètre mesurable, tel que la puissance transmise, le gain de canal, le rapport signal sur bruit ;
un paramètre de couche réseau tel qu'une identification de dispositif, une adresse MAC, une identification d'utilisateur, une adresse IP, une identification de réseau.

3. Système selon la revendication 2, dans lequel le système de gestion est configuré pour comparer une valeur d'un paramètre de couche physique d'un premier dispositif de réseau électrique intelligent de ladite première pluralité de dispositifs de réseau électrique intelligent avec une valeur du même paramètre de couche physique d'un deuxième dispositif de réseau électrique intelligent de ladite deuxième pluralité de dispositifs de réseau électrique intelligent, et pour communiquer une stratégie de résolution de problème sous forme d'une reconfiguration du même ou d'un autre paramètre de couche physique.

4. Système selon la revendication 2 ou 3, dans lequel le système de gestion est configuré pour comparer une valeur d'un paramètre de couche réseau d'un premier dispositif de réseau électrique intelligent de ladite première pluralité de dispositifs de réseau électrique intelligent avec une valeur du même paramètre de couche réseau d'un deuxième dispositif de réseau électrique intelligent de ladite deuxième pluralité de dispositifs de réseau électrique intelligent, et pour communiquer une stratégie de résolution de problème sous forme d'une reconfiguration du même ou d'un autre paramètre de couche réseau.

5. Système selon l'une quelconque des revendications précédentes, dans lequel le système de gestion, le premier et/ou le deuxième centre de coordination de données, et la première et la deuxième pluralité de concentrateurs sont équipés d'une interface de gestion à distance de sorte à pouvoir ajuster à distance un réglage d'un dispositif de réseau électrique intelligent de la première et la deuxième pluralité de dispositifs de réseau électrique intelligent.

6. Système selon la revendication 5, dans lequel l'interface de gestion à distance est configurée pour ajuster l'un quelconque ou plusieurs des paramètres suivants d'un dispositif de réseau électrique intelligent :
un paramètre de couche physique tel qu'un canal utilisé, un canal disponible ;
un paramètre mesurable, tel que la puissance transmise, le gain de canal, le rapport signal sur bruit ;
un paramètre de couche réseau tel qu'une identification de dispositif, une adresse MAC, une identification d'utilisateur, une adresse IP, une identification de réseau.

7. Procédé destiné à résoudre des problèmes dans un réseau électrique intelligent, ledit réseau électrique intelligent comprenant au moins un premier réseau d'opérateur de réseau électrique intelligent (35) disposant d'une première pluralité de dispositifs de réseau électrique intelligent, et un deuxième réseau d'opérateur de réseau électrique intelligent (35) disposant d'une deuxième pluralité de dispositifs de réseau électrique intelligent, ledit premier réseau d'opérateur de réseau électrique intelligent et ledit deuxième réseau d'opérateur de réseau électrique intelligent étant détenus par des opérateurs différents ;
ledit procédé comprenant les étapes suivantes :
dans ledit premier réseau d'opérateur de réseau électrique intelligent, recueillir des premières données en provenance de la première pluralité de dispositifs de réseau électrique intelligent ; et envoyer lesdites données recueillies sous forme traitée ou brute à un premier centre de coordination de données (30) ;
dans ledit deuxième réseau d'opérateur de réseau électrique intelligent, recueillir des deuxièmes données en provenance de la deuxième pluralité de dispositifs de réseau électrique intelligent ; et envoyer lesdites données recueillies sous forme traitée ou brute à un deuxième centre de coordination de données (30) ;
traiter lesdites premières et deuxièmes données recueillies et communiquer une stratégie de résolution de problème pour résoudre un problème d'interférence auxdits premier et/ou deuxième centres de coordination de données en fonction desdites premières et deuxièmes données traitées ;
ajuster un réglage d'un dispositif de réseau électrique intelligent desdites première et deuxième pluralités de dispositifs de réseau électrique intelligent en fonction de la stratégie de résolution de problème communiquée ;
dans lequel ledit premier réseau d'opérateur comprend l'un quelconque ou plusieurs des domaines suivants : un tronçon de réseau électrique intelligent haute tension (HV), un tronçon de réseau électrique intelligent moyenne tension (MV), un tronçon de réseau électrique intelligent basse tension (LV) ;
dans lequel ledit deuxième réseau d'opérateur comprend : un tronçon de réseau électrique intelligent haute tension (HV), un tronçon de réseau électrique intelligent moyenne tension (MV) et un tronçon de réseau électrique intelligent basse tension (LV) ;
dans lequel lesdites premières et deuxièmes pluralités de concentrateurs comprennent au moins un concentrateur pour chaque tronçon, respectivement.

8. Procédé selon la revendication 7, dans lequel les données recueillies comprennent des valeurs pour l'un quelconque ou plusieurs des paramètres suivants d'un dispositif de réseau intelligent :
un paramètre de couche physique tel qu'un canal utilisé, un canal disponible ;
un paramètre mesurable, tel que la puissance transmise, le gain de canal, le rapport signal sur bruit ;
un paramètre de couche réseau tel qu'une identification de dispositif, une adresse MAC, une identification d'utilisateur, une adresse IP, une identification de réseau.

9. Procédé selon la revendication 8, dans lequel le traitement comprend la comparaison d'une valeur d'un paramètre de couche physique d'un premier dispositif de réseau électrique intelligent de ladite première pluralité de dispositifs de réseau électrique intelligent avec une valeur du même paramètre de couche physique d'un deuxième dispositif de réseau électrique intelligent de ladite deuxième pluralité de dispositifs de réseau électrique intelligent, et la communication d'une stratégie de résolution de problème sous forme d'une reconfiguration du même ou d'un autre paramètre de couche physique.

10. Procédé selon la revendication 8 ou 9, dans lequel le traitement comprend la comparaison d'une valeur d'un paramètre de couche réseau d'un premier dispositif de réseau électrique intelligent de ladite première pluralité de dispositifs de réseau électrique intelligent avec une valeur du même paramètre de couche réseau d'un deuxième dispositif de réseau électrique intelligent de ladite deuxième pluralité de dispositifs de réseau électrique intelligent, et la communication d'une stratégie de résolution de problème sous forme d'une reconfiguration du même ou d'un autre paramètre de couche réseau.

11. Procédé selon l'une quelconque des revendications 7 à 10, dans lequel le traitement comprend la comparaison d'une valeur d'un paramètre d'un premier dispositif de réseau électrique intelligent de ladite première pluralité de dispositifs de réseau intelligents avec une valeur du même paramètre d'un deuxième dispositif de réseau électrique intelligent de ladite deuxième pluralité de dispositifs de réseau intelligents, et la communication d'une stratégie de résolution de problème sous forme d'une reconfiguration du même ou d'un autre paramètre.
